# EUROPÄISCHE PATENTSCHRIFT

(11) **EP 1 411 611 B1**
(45) Veröffentlichungstag und Bekanntmachung des Hinweises auf die Patenterteilung: **22.08.2007**
(21) Anmeldenummer: 03022073.5
(22) Anmeldetag: 01.10.2003
(51) Int. Cl.: H02G 3/04, H02G 3/34

(54) **Anordnung zur Verlegung von Kabeln im Fussbodenbereich eines Verkehrsflugzeuges**
Arrangement and mounting of cables at floor level of a passenger aircraft
Disposition et montage de câbles au niveau du sol d'un avion de passagers

(30) Priorität: 16.10.2002 DE 10248241
(43) Veröffentlichungstag der Anmeldung: 21.04.2004
(73) Patentinhaber: Airbus Deutschland GmbH, 21129 Hamburg (DE)
(72) Erfinder: Winkelbach, Horst, 21244 Buchholz (DE); von Hacht, Rüdiger, 21129 Hamburg (DE)
(74) Vertreter: Hansmann, Dierk

(56) Entgegenhaltungen:
- EP-A- 1 241 759
- US-A- 3 118 017
- US-A1- 2002 144 835
- US-B1- 6 448 497

## Beschreibung

Die Erfindung betrifft eine Anordnung zur Verlegung von Kabeln im Fußbodenbereich eines Verkehrsflugzeuges, wobei Längsführungselemente und Querführungselemente vorgesehen sind, die Kabelkanäle bilden.

Es ist bekannt, in Passagierflugzeugen im Bodenbereich Leitungen und Kabel bzw. Kabelbündel zur Versorgung von den Passagiersitzen zugeordneten elektrischen Anschlüssen oder den in den Sitzen integrierten Unterhaltungssystemen vorzusehen. So sind Daten- und Versorgungsleitungen, beispielsweise für das Passenger Entertainment System (PES) oder Energieleitungen für den Anschluss von Laptop's zu verlegen, die in sichtbaren oder durch Teppichen verdeckten Kabelkanälen verlaufen. Für eine Sitzverkabelung ist neben einer Längsverlegung im Bereich der Sitzschienen auch eine Quereinspeisung ausgehend von Anschlussmodulen im Bereich des Dado-Panels, d.h. ausgehend von den Wandverkleidungen im Fußbodenbereich innerhalb der Flugzeugkabine, vorgesehen. Hierbei können auch sich kreuzende Leitungen vorkommen. Eine derzeitige Kabelverlegung mit üblichen Kabelkanälen ist relativ aufwändig, erlaubt freiliegende und damit ungeschützte Kabelleitungen und kann nicht flexibel den Anforderungen an eine verbesserte Sitzkabelverlegung genügen, die im Zuge einer immer steigenden Verbesserung der Informations- und Unterhaltungsmöglichkeiten am Passagiersitz eine steigende Anzahl von Daten- und Versorgungsleitungen in einer Passagierkabine eines Flugzeuges zur Folge hat.

In US 2002/144835 A1 ist ein geschützter Kabelverlegungsweg im Bereich einer Sitzschiene eines Flugzeuges gezeigt. Die Kabelverlegung im Fußbodenbereich eines Flugzeuges erfolgt innerhalb einer Kabelführung als Längsführungselement. Querverlaufende Leitungen sowie eine flexible seitliche Einspeisung in das Längsführungselement sind in diesem Kabelverlegungsweg nicht vorgesehen. Damit können für einen Kabelverlegungsweg insbesondere im Bereich von Kreuzungen und querverlaufenden Kabeln freiliegende und ungeschützte Kabelleitungen auftreten und ein durchgängiger Schutz der Kabel kann nicht gewährleistet werden.

Der vorliegenden Erfindung liegt somit die Aufgabe zugrunde, eine Anordnung zur Verlegung von Kabeln auszubilden, die den Erfordernissen, größere Leitungsdurchmesser verlegen zu können sowie eine Erhöhung der Anzahl der zu verlegenden Leitungen zu ermöglichen, bei einem minimalen Montageaufwand gerecht wird. Weiterhin sind flexible Verlegwege zu ermöglichen, die kontinuierlich eine geschützte Verlegung von Kabeln vorsehen.

Diese Aufgabe wird erfindungsgemäß durch die im Patentanspruch 1 genannten Maßnahmen gelöst.

Dabei ist nach Anspruch 1 insbesondere vorteilhaft, dass die erfindungsgemäßen Komponenten aufgrund ihrer Ausgestaltung individuell kombinierbar und somit zu Verlegewegen für Kabel und Kabelbündel entsprechend den Anforderungen zusammenfügbar sind. Eine präzise und schnelle Verlegung der Kabel und Leitungen zu den Versorgungseinheiten an den Passagiersitzen ist realisierbar. Ein durchgängiger Schutz der Kabel und Leitungen ist gewährleistet, d.h. auch im Anschlussbereich der Sitzgestelle an den Sitzschienen, zwischen den Sitzen oder von Sitzreihe zu Sitzreihe innerhalb einer Flugzeugpassagierkabine ist ein festgelegter und geschützter Verlegeweg mit einem geringen Montageaufwand erreichbar.

Weiterbildungen und vorteilhafte Ausgestaltungen sind in den Ansprüchen 2 bis 14 angegeben. Einzelheiten und weitere Vorteile ergeben sich aus der nachfolgenden Beschreibung von Ausführungsbeispielen der Erfindung.

In der Zeichnung sind Ausführungsbeispiele der Erfindung dargestellt, die nachstehend anhand der Figuren 1 bis 14 näher beschrieben sind. In den Figuren sind gleiche Bauteile mit gleichen Bezugszeichen versehen.
Es zeigen im einzelnen:
- Fig. 1: eine Draufsicht auf eine Passagierkabine eines Flugzeuges mit einer Anordnung zur Verlegung von Kabeln,
- Fig. 2: eine Darstellung einer Sitzgruppe in einer Passagierkabine in einer Ansicht von vorn,
- Fig. 3: eine Versorgungeinheit am Sitzfuß einer Sitzgruppe gemäß Schnitt E-E der Sitzgruppendarstellung in Fig. 2,
- Fig. 4: eine Schnittdarstellung gemäß Schnitt D-D mit der Ansicht von Kabelführungselementen im Bereich von Sitzschienen,
- Fig. 5: eine Einzelheitdarstellung einer Sitzschienenabdeckung der Kabelverlegungsanordnung,
- Fig. 6: Kabelführungselemente im Bereich von Sitzschienen in einer zweiten Ausführungsform,
- Fig. 7: eine Einzelheitdarstellung einer Endkappe als Abschlusselement eines Kabelführungselementes,
- Fig. 8: eine Draufsicht auf die Kabelverlegungsanordnung im Bereich einer Anschlusseinheit mit querverlaufenden Kabelführungselementen,
- Fig. 9: eine Schnittdarstellung mit der Ansicht von Kabelführungselementen im Bereich der Seitenverkleidung der Passagierkabine,
- Fig. 10: eine Einzelheitdarstellung eines Unterabschnitts einer Kabelweiche,
- Fig. 11: eine Einzelheitdarstellung eines Oberabschnitts einer Kabelweiche,
- Fig. 12: das querverlaufende Kabelführungselement in einer Einzelheitdarstellung,
- Fig. 13: das querverlaufende Kabelführungselement gemäß Fig. 12 in einer Anwendungsdarstellung und
- Fig. 14: ein Ausführungsbeispiel einer Kabelverlegungsanordnung im Bereich einer Sitzschiene.

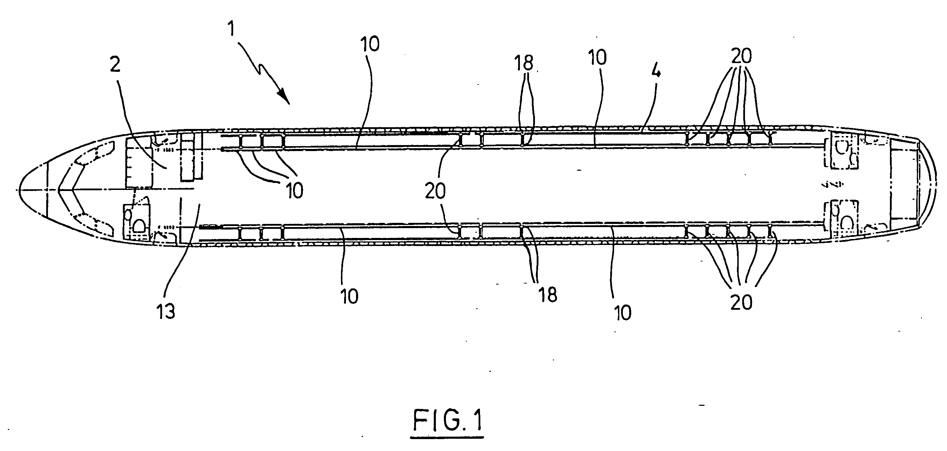

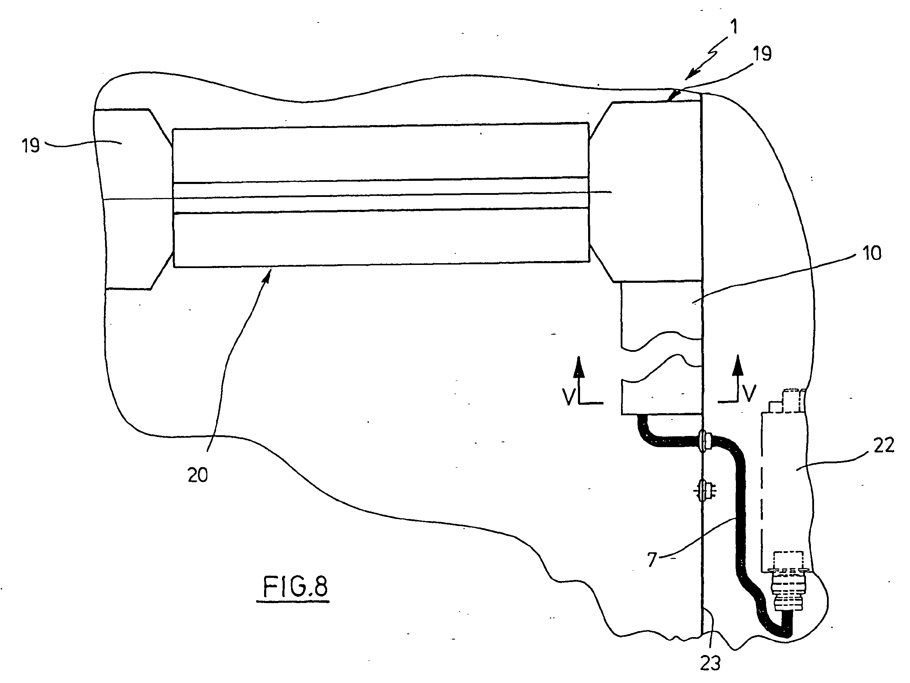

In der Figur 1 ist in schematischer Darstellung eine Draufsicht auf eine Flugzeugpassagierkabine 2 gezeigt. Im Fußbodenbereich 13 eines Verkehrsflugzeuges sind unter anderem Leitungen und Kabel zur Versorgung von den Passagiersitzen mit Daten oder elektrischer Energie vorgesehen. Eine Anordnung zur Verlegung von Kabeln 1 ist gebildet mit einem Verlegeweg 4 für ein Verkehrsflugzeug, wie beispielsweise für eine Airbus A318, deren Layout in der Draufsicht dargestellt ist. Die Kabelverlegung erfolgt hier im Bereich der nicht ersichtlichen Passagiersitzgruppen in Längsführungselementen 10 und Querführungselementen 20. An den Kreuzungspunkten 18 zwischen Längs- und Querführungselementen 10 und 20 sind Kabelweichen 19 (gezeigt beispielsweise in Fig. 8) vorgesehen. Die genannten Komponenten sind aufgrund ihrer Ausgestaltung individuell kombinierbar und somit zu Verlegewegen für Kabel und Kabelbündel entsprechend den Anforderungen zusammenfügbar. Eine präzise und schnelle Verlegung der Kabel und Leitungen zu den Versorgungseinheiten an den Passagiersitzen ist realisierbar.

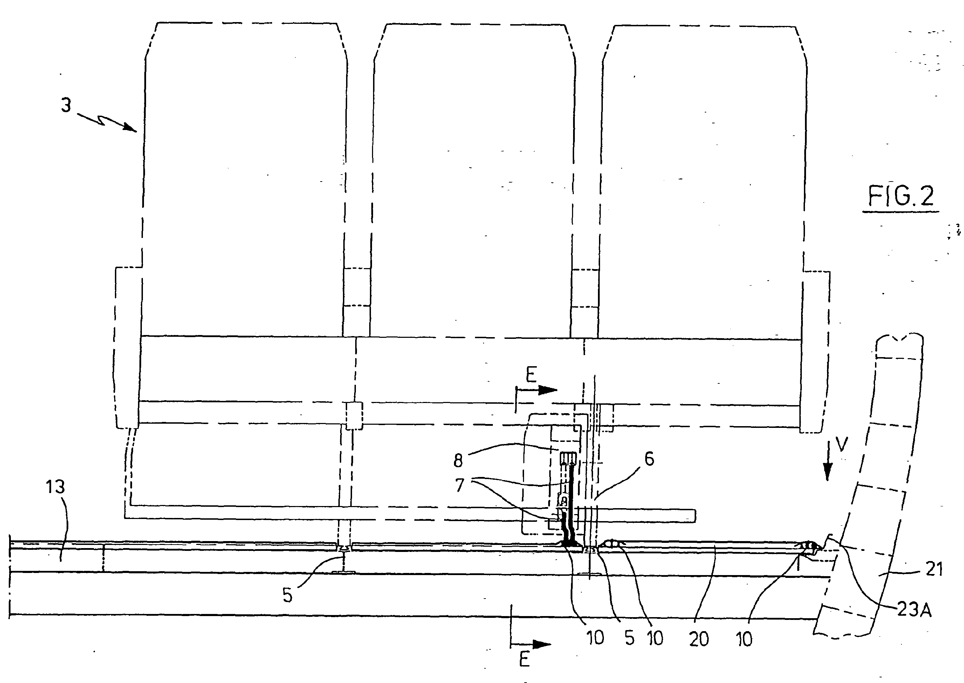

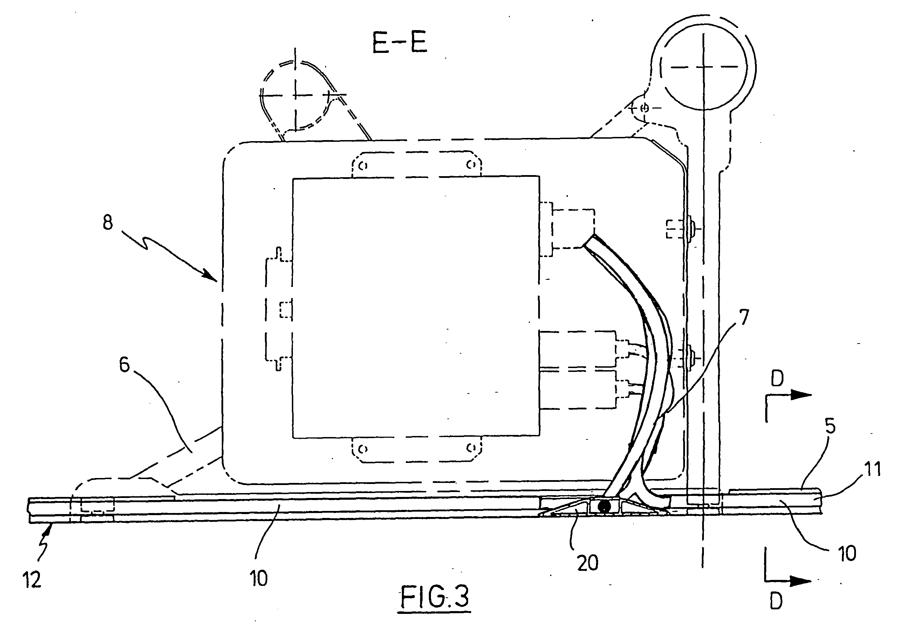

In Fig. 2 ist in einer Ansicht von vorn eine Passagiersitzgruppe 3 gezeigt, die auf dem Flugzeugfußboden 13 in längsverlaufenden Sitzschienen 5 befestigt ist. In einem Verkehrsflugzeug sind eine Vielzahl derartiger Dreier-Sitzgruppen, Zweier-Sitzgruppen oder Einzelsitze hintereinander angeordnet und bilden Sitzreihen. Zur Versorgung einer Sitzreihe mit Daten und elektrischer Energie ist am Sitzgestell, im Bereich des Sitzfußes 6 eine Versorgungseinheit 8 vorgesehen. In Fig. 3 ist die Versorgungseinheit 8 - auch Anschlussbox genannt - als Einzelheit dargestellt. Daten- und Versorgungsleitungen 7 sind aufgrund der am Sitz zur Verfügung zu stellenden Informations- und Unterhaltungsmöglichkeiten zur Versorgungseinheit 8 zu verlegen. In der gezeigten Ausführungsform erfolgt ausgehend von einem Anschluss im Bereich der Flugzeugaußenwand 21 eine Quereinspeisung über ein Querführungselement 20 in den Bereich der Sitzgruppe 3 und dort zur Versorgungseinheit (Anschlussbox) 8 oder entlang der Sitzschiene 5 in Längsführungselementen 10 zu einer weiteren Sitzreihe. Ersichtlich ist, dass Oberteile 11 der Längsführungselemente 10 mit Spalten verlegbar sind, die ein Abzweigen von Leitungen 7 zu der Anschlussbox 8 ermöglichen.

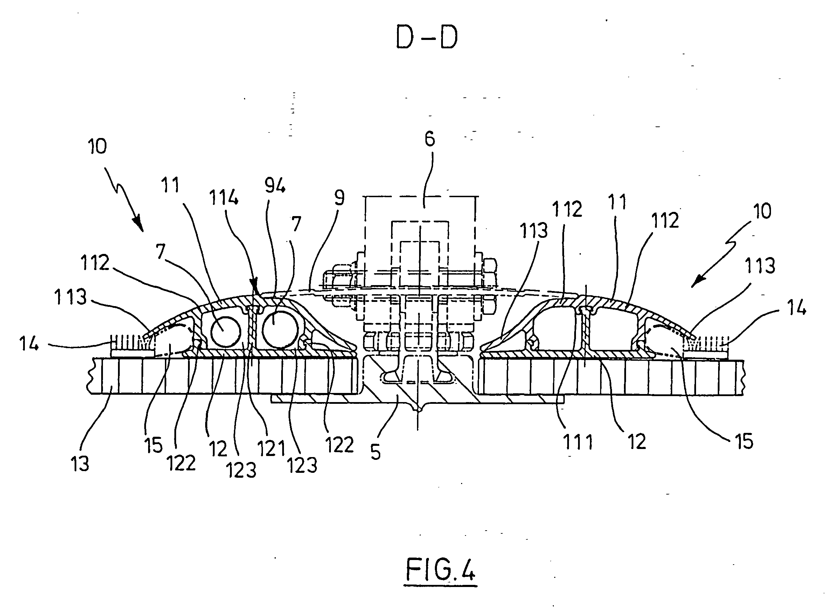

Der Verlauf der Kabelverlegung im Bereich einer Sitzschiene 5 ist in einer Schnittdarstellung in Fig. 4 ersichtlich. In der Sitzschiene 5 ist - in gestrichelter Darstellung ersichtlich - der Sitzfuß 6 befestigt. In den Bereichen der Sitzschiene 5 zwischen den Sitzreihen, die keine Teile des Sitzgestells 6 aufnehmen, ist eine Sitzschienenabdeckung 9 vorgesehen. Es ist ersichtlich, dass Längsführungselemente 10 beidseitig und parallel zur Sitzschiene 5 angeordnet sind. Die Längsführungselemente 10 bestehen aus je einem Oberteil 11 und einem Unterteil 12. Die Oberteile 11 und Unterteile 12 können in Standardlängen vorgesehen sein und modulartig zu den benötigten Längen zusammengesetzt werden. Sie sind vorzugsweise Strangpressteile, was eine kostengünstige Herstellung ermöglicht. Als Material ist ein Kunststoff, vorzugsweise Polyamid, verwendbar. Das Unterteil 12 bzw. mehrere hintereinander angeordnete Unterteile 12 werden zu einem Verlegeweg 4 auf dem Flugzeugfußboden 13 befestigt, die Kabel und Leitungen 7 werden verlegt und mit den Oberteilen 11 erfolgt ein Abdecken des Leitungsweges 4.
Das Unterteil 12 des Längsführungselementes 10 weist einen Mittelsteg 121 sowie seitlich beabstandet parallel verlaufende Seitenstege 122 auf. Damit ist jeweils links und rechts des Mittelsteges 121 ein Kabelkanal 123 gebildet. Das Oberteil 11 des Längsführungselementes 10 weist ein mit dem Mittelsteg 121 korrespondierendes Einrastelement 111 auf. Ausgehend vom Einrastelement 111 sind seitliche Abdeckelemente 112 vorgesehen, die der Abdeckung der Kabelkanäle 123 dienen und an den Seitenstegen 122 einrasten können. Der Randbereich 113 jeweils eines seitlichen Abdeckelementes 112 ragt über den jeweiligen Kabelkanal 123 hinaus und ist flexibel federnd und biegsam ausgebildet. Damit ist es möglich, beim nach außen gerichteten, d.h. weg von der Sitzschiene 5 gerichteten seitlichen Abdeckelement 112 unterhalb des Randbereichs 113 ein Ende eines Fußbodenbelages 14, beispielsweise einen Teppichrand 15 anzuordnen. Damit ist ein geordneter, sauberer Abschluss erzielt und der Randsteg 113 des seitlichen Abdeckelementes 112 hält durch entsprechende Gestaltung des Teppichrandes 15 den Teppich 14 in Position oder verhindert das Hochklappen des Teppichs 14, was gleichzeitig eine Gefahren- oder Stolperstelle für die Passagiere ausschaltet. Das nach innen, d.h. zur Sitzschiene 5 hin gerichtete Abdeckelement 112 liegt mit seinem Randbereich 113 am Außenrand des Unterteils 12 an.

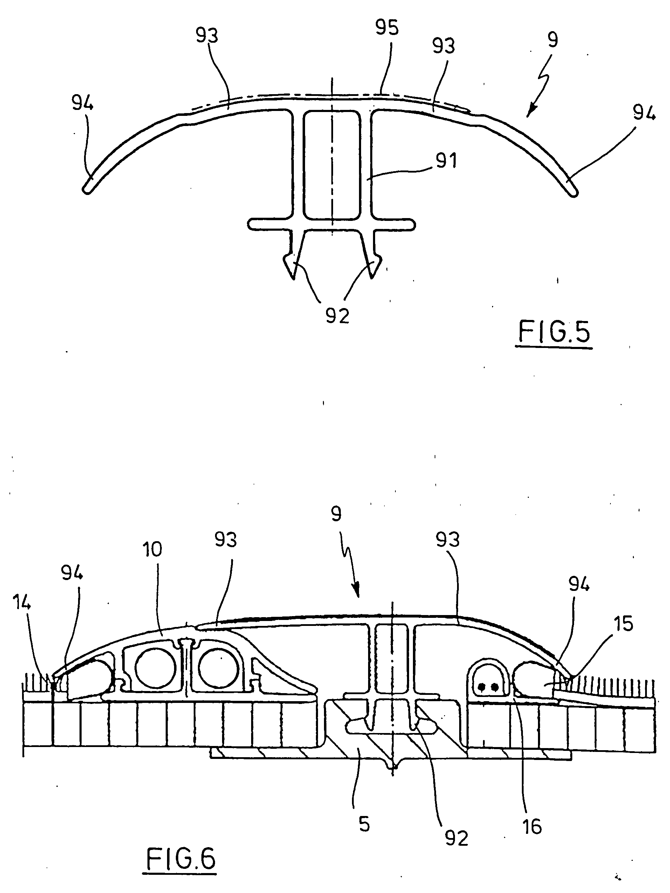

Oberhalb der Sitzschiene 5 ist in den Bereichen, die keine Bestandteile des Sitzgestells 6 aufnehmen, eine Sitzschienenabdeckung 9 angeordnet. In Fig. 5 ist die Sitzschienenabdeckung 9 in einer Einzelheitdarstellung gezeigt. Die Sitzschienenabdeckung 9 weist ein Mittelteil 91 mit Rastelementen 92 auf. Die Rastelemente 92 greifen in die Sitzschiene 5 ein und halten somit die Abdeckung 9 in entsprechender Position. Ausgehend vom Mittelteil 91 sind seitliche Abdeckungen 93 vorgesehen, deren jeweiliger Randbereich 94 flexibel federnd in Richtung des Fußbodens ausgebildet ist. Der mittlere Bereich der Sitzschienenabdeckung 9 ist mit einer Antirutsch-Oberfläche 95 versehen oder entsprechend ausgebildet, um ein Ausrutschen von gehenden Passagieren zu vermeiden. In Fig. 4 ist ersichtlich, dass der Randbereich 94 der Abdeckleisten der Sitzschienenabdeckung 9 mit der äußeren Form des Oberteils 11 des Längsführungselementes 10 korrespondiert. Die Sitzschienenabdeckung 9 deckt zumindest teilweise die parallel zur Sitzschiene 5 verlaufenden Längsführungselemente 10 ab, wobei der Randbereich 94 der Sitzschienenabdeckung 9 zumindest teilweise das Oberteil 11 in Längsrichtung überlappt. Aufgrund von in Längsrichtung im Oberteil 11 eingebrachten Absetzungen 114 zwischen dem Randbereich 94 der Sitzschienenabdeckung 9 und der Oberseite des Oberteils 11 ist kein merklicher Übergang erkennbar, was ein Stolpern oder Hängenbleiben an den Abdeckteilen verhindert.

In einer in Fig. 6 gezeigten Ausführungsform überdeckt die Sitzschienenabdeckung 9 nach dem Eingreifen der Rastelemente 92 in die Sitzschiene 5 mit einer seitlichen Abdeckleiste 93 ein Längsführungselement 10, wie bereits beschrieben. Mit der anderen seitlichen Abdeckleiste 93 werden parallel zur Sitzschiene 5 verlaufende übliche Kabelführungen 16 und/oder Fußbodenbelagränder 15 zumindest teilweise abgedeckt. Durch eine flexibel biegsame Ausgestaltung der Randbereiche 94 kann der Randbereich 94 sich über den Belagrand 15 erstrecken und den Teppich 14 gegen ein Hochklappen oder Hochrollen sichern und ihn in Position halten. Als Material für eine Sitzschienenabdeckung 9 ist ein Kunststoff, vorzugsweise Polyamid, verwendbar.

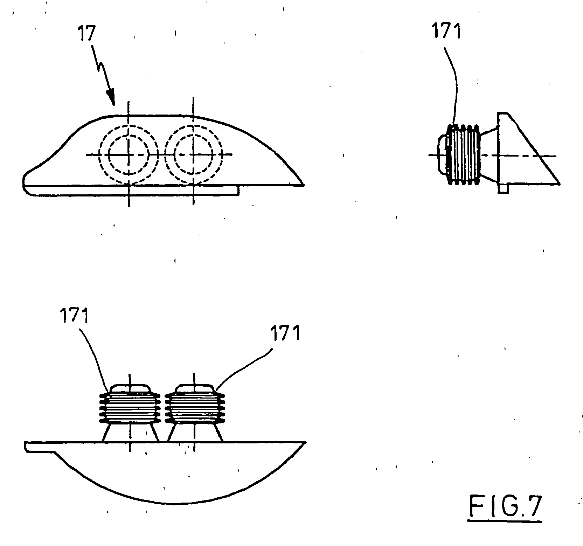

In Fig. 7 ist in einer Einzelheitdarstellung eine Endkappe 17 in drei Ansichten ersichtlich. Das Längsführungselement 10 kann im Endbereich eines Kabelverlegungsweges 4 mit einer derartigen Endkappe 17 versehen sein. Mittels Rastzapfen 171 ist sie in Kabelkanäle 123 von Längsführungselementen 10 einrastbar und schließt damit den entsprechenden Leitungsweg (Kabelkanal). Ein derartiger Abschluss verhindert das Eindringen von Verschmutzungen in den Verlegeweg und schützt somit die zu verlegenden Kabel und Leitungen 7.

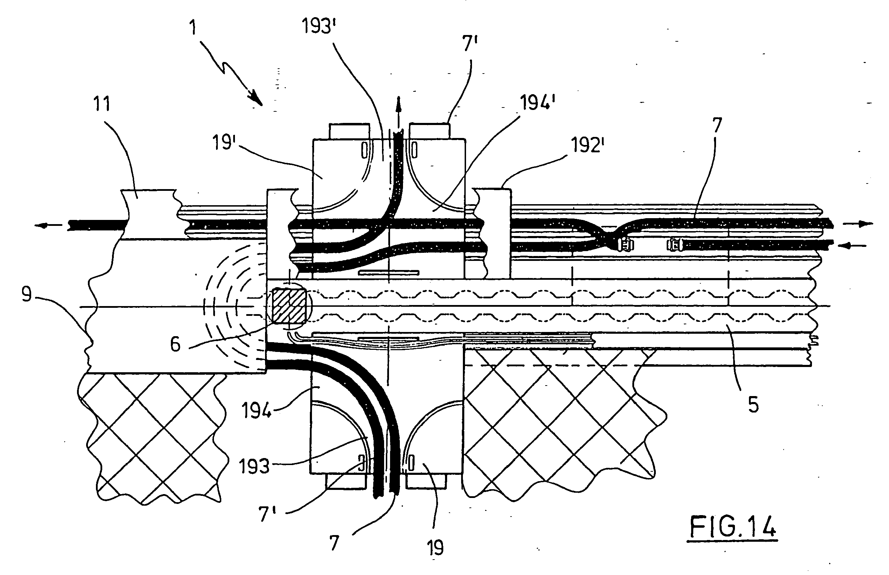

In Fig. 8 ist in einer Draufsicht auf die Kabelverlegungsanordnung 1 der Teilbereich der Quereinspeisung dargestellt. Ein Anschlussmodul 22 im Bereich des Dado-Panels, d.h. der Wandverkleidung 23 im Bereich des Fußbodens einer Passagierkabine stellt unter anderem elektrische Energie und Signale für Unterhaltungssysteme für die Versorgungseinheit 8 an der entsprechenden Passagiersitzgruppe zur Verfügung. Die Anschlussmodule 22 sind etwa jede fünfte Sitzreihe vorgesehen und es sind entsprechende Kabelverlegungen zu den Passagiersitzen notwendig. Die Versorgungsleitung 7 wird über mindestens ein Längsführungselement 10 im Bereich des Dado-Panels 23 zum Ort der Quereinspeisung in Richtung der Sitzschienen geführt. Es schließt sich eine Kabelweiche 19 an, die entweder ein Weiterführen der Leitung 7 in längsverlaufenden Bereichen oder ein Umlenken der Leitung 7 zu einem Querführungselement 20 ermöglicht. Das Querführungselement 20 kann entsprechend der notwendigen Länge aus Elementen mit Standardlängen oder auf Länge geschnitten vorgesehen sein. Es schließt sich wiederum eine Kabelweiche 19 an, die am entsprechenden Kreuzungspunkt 18 ein Weiterführen der Leitungen bzw. Kabel 7 zu mindestens einem Längsführungselement 10 ermöglicht (ein Beispiel ist gezeigt in Fig. 14).

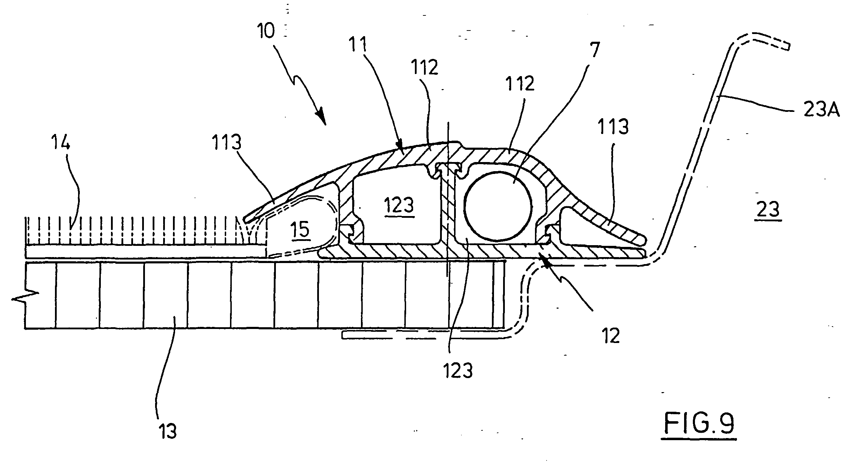

In Fig. 9 ist einer Schnittdarstellung gemäß des Schnittes V-V in Fig. 8 ein Längsführungselement 10 im Bereich der Seitenwandverkleidung 23 der Flugzeugpassagierkabine 2 gezeigt. Das Längsführungselement 10 ist identisch mit den Längsführungselementen im Sitzschienenbereich, wie beispielhaft in Fig. 4 gezeigt. Durch die Verwendung von gleichen Bauteilen kann der Herstell- und Montageaufwand optimiert werden. Mit einer geringen Anzahl von verschiedenen Standardbauteilen zur Erstellung eines Verlegeweges können entsprechend der individuellen Anforderungen Kabelverlegungen vorgenommen werden. Es ist ersichtlich, dass das Unterteil 12 des Längsführungselementes 10 über den Randbereich des Fußbodenelementes 13 hinausragt und somit einen Übergang zum Seitenverkleidungsfusswinkel 23A erreicht. Mit dem Oberteil 11 werden die offenen Kabelkanäle 123 nach der Verlegung des Kabels 7 geschlossen. Mit dem Randbereich 113 der seitlichen Abdeckelemente 112 wird der Rand 15 vom Fußbodenbelag 14 abgedeckt und am Flugzeugboden 13 gehalten. Mit dem Einsatz der Längsführungselemente 10 im Wandbereich der Passagierkabine 2 ist somit neben der Kabelführungsfunktion ein vorteilhafter Abschluss der Fußbodenverlegung erreicht.

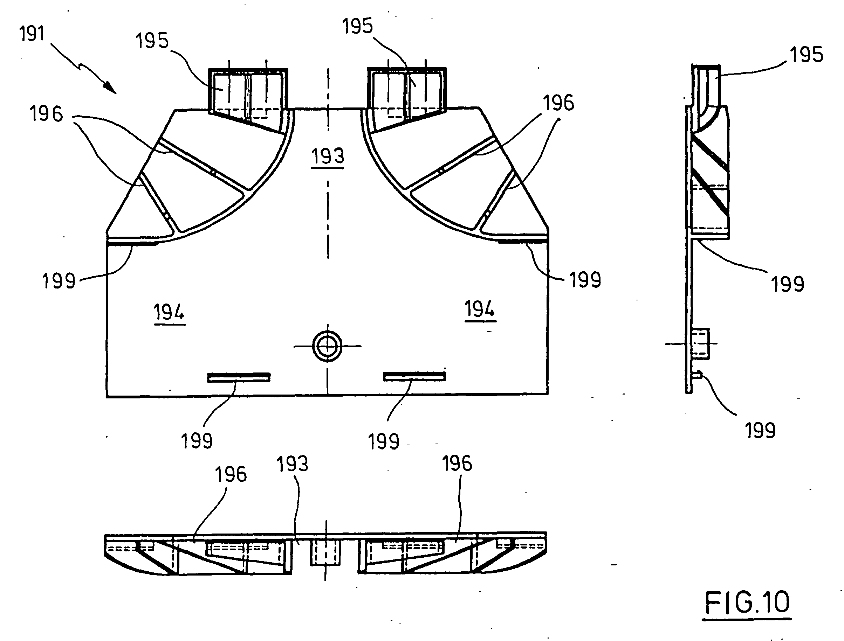

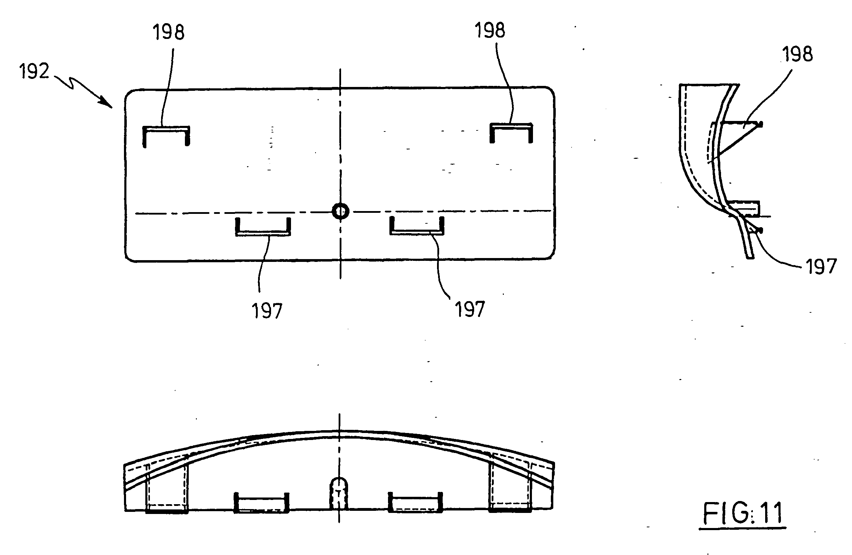

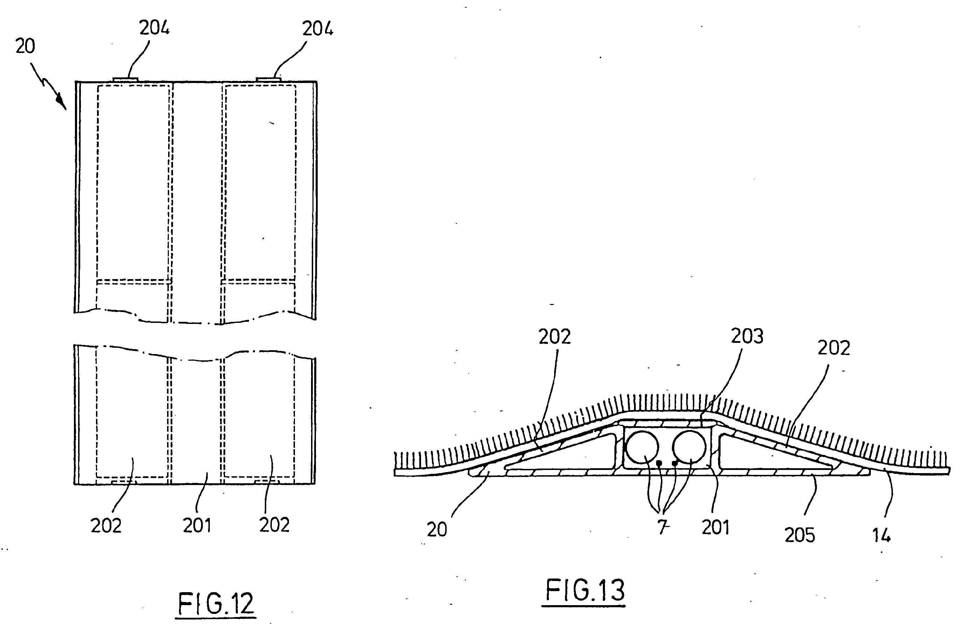

In den Fign. 10 und 11 ist die Kabelweiche 19 mit ihren zwei wesentlichen Bestandteilen - einem Unterabschnitt 191 sowie einem Oberabschnitt 192 - jeweils in drei Ansichten dargestellt. Fig. 10 zeigt den Unterabschnitt 191, der zur Aufnahme der Kabel und Leitungen vorgesehen ist und einen querverlaufenden Aufnahmebereich 193 und einen längsverlaufenden Aufnahmebereich 194 aufweist. Die Kabel oder Leitungen 7 können im längsverlaufenden Aufnahmebereich 194 in Längsrichtung weitergeführt werden oder über den querverlaufenden Aufnahmebereich 193 zu einem Querführungselement 20 gelenkt werden. An der Stirnseite des querverlaufenden Aufnahmebereichs 193 sind vorzugsweise Verbindungsmittel 195 vorgesehen, die ein Zusammenstecken mit dem nächsten Führungselement ermöglichen. Um eine stabile Ausführung der Kabelweiche 19 zu erreichen, sind am Unterabschnitt 191 Versteifungsrippen 196 vorgesehen, die einen Versteifungsbereich bilden. Eine Abdeckung des Unterabschnitts 191 ist mit dem Oberabschnitt 192 vorgesehen, der in Fig. 11 ersichtlich ist. Der Oberabschnitt 192 ist zur Abdeckung des längsverlaufenden Aufnahmebereichs 194 vorgesehen. Innere Rastelemente 197 und äußere Rastelemente 198 können in entsprechende Halterungen 199 am Unterabschnitt 191 einrasten und somit einen stabilen, trittfesten Schutz der Kabel ermöglichen. Der querverlaufende Aufnahmebereich 193 sowie das daran sich anschließende Querführungselement 20 sind im eingebauten Zustand (siehe Fig. 13 und 14) unterhalb des Fußbodenbelags 14 angeordnet, was eine zusätzliche Abdeckung dieses Bereichs nicht notwendig macht.

In Fig. 12 ist das Querführungselement 20 in einer Einzelheitdarstellung gezeigt. Eine Querschnittsdarstellung ist in Fig. 13 ersichtlich. Vorgesehen ist im Mittelbereich des Querführungselements 20 ein Kabelkanal 201. Vorzugsweise durch eine Abdeckleiste 203 ist der Kabelkanal 201 verschlossen. Seitlich des Kabelkanals sind Übergangsschrägen 202 vorgesehen. Damit ist für die Verlegung im Fußbodenbereich die Stolpergefahr für Passagiere vermindert. Zur Erreichung einer ausreichenden Trittfestigkeit bilden die Übergangsschrägen 202 gemeinsam mit den Seitenstegen des Kabelkanals 201 und einer Bodenplatte 205 ein geschlossenes Dreiecksprofil. In Fig. 13 ist ersichtlich, dass das Querführungselement 20 vorzugsweise unterhalb des Fußbodenbelages 14 angeordnet ist. Die Verbindung zur Kabelweiche 19 ist mit den Verbindungsmitteln 195 und 204 ermöglicht. Ebenso ist ein Verbinden mehrerer Querführungselemente 20 mittels der Verbindungsmittel 204 vorgesehen.

In Fig. 14 ist in eine Kabelverlegungsanordnung 1 im Bereich einer Sitzschiene 5 in einer Draufsicht gezeigt. Ersichtlich ist in dieser Variante der Verlauf der Kabel bzw. Leitungen 7, 7' ausgehend von einer Quereinspeisung von einer Seite der Sitzschiene 5 um ein Sitzgestell bzw. Sitzfuß 6 herum auf die andere Seite der Sitzschiene 5. Die Leitungen 7 und 7' werden vom querverlaufenden Aufnahmebereich 193 der Kabelweiche 19 aufgenommen, verlassen die Kabelweiche 19 am Ausgang des längsverlaufenden Bereiches 194 und werden unterhalb der Sitzschienenabdeckung 9 in einer 180°-Kehre weitergeführt. Nunmehr befinden sich die Leitungen 7 und 7' auf der anderen Seite der Sitzschiene 5. Innerhalb einer zweiten Kabelweiche 19' erfolgt eine Aufteilung der Leitungen 7 und 7'. Die Leitung 7' wird über den querverlaufenden Aufnahmebereich 193' der Kabelweiche 19' quer zur Flugzeuglängsrichtung weitergeleitet. Die Leitung 7 wird über den längsverlaufenden Bereich 194' zu einem Längsführungselement 10 geführt, welches eine Führung der Leitung 7 parallel zur Sitzschiene 5 bis zu einer weiteren Sitzreihe ermöglicht. Die Unterteile 12 der Längsführungselemente 10 werden durch Oberteile 11 abgedeckt. Eine Abdeckung im Bereich der Kabelweiche 19 ist mit dem Oberabschnitt 192 vorgesehen.

### Bezugszeichenliste

- 1 -: Anordnung zur Verlegung von Kabeln
- 2 -: Flugzeugpassagierkabine
- 21 -: Flugzeugwand
- 22 -: Anschlussmodul
- 23 -: Fußverkleidung (Dado-Panel)
- 23A -: Seitenverkleidungsfusswinkel

- 3 -: Sitzgruppe
- 4 -: Verlegeweg für Kabel und Leitungen
- 5 -: Sitzschienen
- 6 -: Sitzgestell/Sitzfuß
- 7 -: Leitungen
- 8 -: Versorgungseinheit (Anschlussbox)

- 9 -: Sitzschienenabdeckung
- 91 -: Mittelteil
- 92 -: Rastelemente
- 93: seitliche Abdeckleisten
- 94: Randbereich der Abdeckleisten
- 95: Antirutschfläche

- 10 -: Längsführungselement

- 11 -: Oberteil
- 111 -: Einrastelement
- 112 -: seitliche Abdeckelemente
- 113 -: Randbereich
- 114 -: Absetzung

- 12 -: Unterteil
- 121 -: Mittelsteg
- 122 -: Seitensteg
- 123 -: Kabelkanal
- 124 -: Halteelemente

- 13 -: Flugzeugfußboden
- 14 -: Fußbodenbelag (Teppich)
- 15 -: Teppichrand
- 16 -: Kabelführungen

- 17 -: Endkappe
- 171 -: Rastzapfen

- 18 -: Kreuzungspunkt
- 19 -: Kabelweiche
- 191 -: Unterabschnitt
- 192 -: Oberabschnitt
- 193 -: querverlaufender Aufnahmebereich
- 194 -: längsverlaufende Bereiche
- 195 -: Verbindungsmittel
- 196 -: Versteifungsrippen
- 197 -: innere Rastelemente
- 198 -: äußere Rastelemente
- 199 -: Halterungen

- 20 -: Querführungselement
- 201 -: Kabelkanal
- 202 -: Übergangsschrägen
- 203 -: Abdeckleisten für Kabelkanal
- 204 -: Verbindungsmittel
- 205 -: Bodenplatte

## Patentansprüche

1. Anordnung zur Verlegung von Kabeln im Fußbodenbereich eines Verkehrsflugzeuges, wobei Führungselemente vorgesehen sind, die Kabelkanäle bilden, die Führungselemente (10, 20) jeweils aus Unterteilen (12; 201) sowie Oberteilen (11; 203) gebildet sind, die Unterteile (12; 201) auf dem Flugzeugfußboden (13) befestigt sind und die Oberteile (11; 203) an den Unterteilen (12; 201) angeordnet sind, **dadurch gekennzeichnet, dass als** Führungselemente (10, 20) Längsführungselemente (10) sowie Querführungselemente (20) vorgesehen sind, wobei die Längsführungselemente (10) unterschiedlich zu den Querführungselementen ausgebildet sind und an mindestens einem Kreuzungspunkt (18) von Längs- und Querführungselementen (10; 20) eine Kabelweiche (19) vorgesehen ist, die mit den Längs- und Querführungselementen (10; 20) einen Kabelverlegungsweg (4) bildet.

2. Anordnung nach Anspruch 1, **dadurch gekennzeichnet, dass**
das Unterteil (12) des Längsführungselementes (10) einen Mittelsteg (121) sowie seitlich beabstandet parallel verlaufende Seitenstege (122) aufweist, die jeweils links und rechts des Mittelsteges (121) zumindest einen Kabelkanal (123) bilden, das Oberteil (11) des Längsführungselementes (10) ein mit dem Mittelsteg (121) korrespondierendes Einrastelement (111) aufweist, ausgehend vom Einrastelement (111) seitliche Abdeckelemente (112) zur Abdeckung der Kabelkanäle (123) vorgesehen sind, wobei der Randbereich (113) eines seitlichen Abdeckelementes (112) über den jeweiligen Kabelkanal (123) hinausragt und flexibel federnd biegsam ist.

3. Anordnung nach Anspruch 1 oder 2, **dadurch gekennzeichnet, dass** die Längsführungselemente (10) im wesentlichen parallel zu im Flugzeugfußboden (13) vorgesehenen Sitzschienen (5) verlaufen, wobei das nach außen gerichtete seitliche Abdeckelement (112) mit seinem Randbereich (113) oberhalb eines Fußbodenbelagrandes (15) anordenbar ist und das nach innen gerichtete Abdeckelement (112) mit seinem Randbereich (113) zur Sitzschiene (5) gerichtet ist.

4. Anordnung nach einem der Ansprüche 1 bis 3, **dadurch gekennzeichnet, dass** oberhalb der Sitzschiene (5) eine Sitzschienenabdeckung (9) angeordnet ist, die ein Mittelteil (91) mit Rastelementen (92) aufweist, welche in die Sitzschiene (5) eingreifen, ausgehend vom Mittelteil (91) seitliche Abdeckleisten (93) vorgesehen sind, deren jeweiliger Randbereich (94) flexibel federnd in Richtung des Fußbodens (13) ausgebildet ist.

5. Anordnung nach Anspruch 4, **dadurch gekennzeichnet, dass** der Randbereich (94) der Sitzschienenabdeckung (9) sowie die äußere Form des Oberteils (11) des Längsführungselementes (10) einander korrespondierend ausgebildet sind.

6. Anordnung nach einem der Ansprüche 1 bis 5, **dadurch gekennzeichnet, dass** die Sitzschienenabdeckung (9) nach dem Eingreifen in die Sitzschiene (5) die parallel zur Sitzschiene (5) verlaufenden Längsführungselemente (10) zumindest teilweise abdeckt, wobei der Randbereich (94) der Sitzschienenabdeckung (9) zumindest teilweise das Oberteil (11) des Längsführungselementes (10) in Längsrichtung überlappt und in eine Absetzung (114) einfügbar ist.

7. Anordnung nach einem der Ansprüche 1 bis 6, **dadurch gekennzeichnet, dass** die Sitzschienenabdeckung (9) nach dem Eingreifen in die Sitzschiene (5) parallel zur Sitzschiene (5) verlaufende Kabelführungen (16) und/oder Fußbodenbelagränder (15) zumindest teilweise abdeckt, wobei der Randbereich (94) der Sitzschienenabdeckung (9) sich über den Belagrand (15) erstreckt und diesen abdeckt bzw. hält.

8. Anordnung nach einem der Ansprüche 1 bis 7, **dadurch gekennzeichnet, dass** zumindest die flexibel federnden Bereiche der Sitzschienenabdeckung (9) sowie die Oberteile (11) aus Kunststoff, vorzugsweise Polyamid bestehen.

9. Anordnung nach einem der Ansprüche 1 bis 8, **dadurch gekennzeichnet, dass** das Längsführungselement (10) im Endbereich einer Kabelverlegungsanordnung (1) mit einer in einen Kabelkanal (123) einrastbaren Endkappe (17) versehen ist.

10. Anordnung nach einem der Ansprüche 1 bis 9, **dadurch gekennzeichnet, dass** das Querführungselement (20) im Mittelbereich einen Kabelkanal (201) vorsieht, der seitlich angeordnete Übergangsschrägen (202) aufweist.

11. Anordnung nach einem der Ansprüche 1 bis 10, **dadurch gekennzeichnet, dass** Verbindungsmittel (204) am Querführungselement (20) vorgesehen sind.

12. Anordnung nach einem der Ansprüche 1 bis 11, **dadurch gekennzeichnet, dass** die Kabelweiche (19) aus einem Unterabschnitt (191) zur Aufnahme der Kabel und Leitungen und einem Oberabschnitt (192) zur Abdeckung gebildet ist, wobei an der querverlaufenden Aufnahme (193) des Unterabschnitts Verbindungsmittel (195) vorgesehen sind, die mit Verbindungsmitteln (204) des Querführungselementes (20) in Wirkverbindung stehen.

13. Anordnung nach einem der Ansprüche 10 bis 12, **dadurch gekennzeichnet, dass** das Querführungselement (20) sowie die querverlaufende Aufnahme (193) des Unterabschnitts (191) unterhalb des Fußbodenbelags (14) anordenbar sind.

14. Anordnung nach einem der Ansprüche 12 und 13, **dadurch gekennzeichnet, dass** der Oberabschnitt (192) als Abdeckung des längsverlaufenden Bereichs (194) vorgesehen ist, wobei Rastelemente (197, 198) an einem Versteifungsbereich (196, 199) des Unterabschnitts (191) und an Halterungen (199) im längsverlaufenden Bereich (194) des Unterabschnitts (191) angreifen.

## Claims

1. Arrangement for laying cables in the floor area of a passenger aircraft, guide elements being provided that form cable ducts, the guide elements (10, 20) each being formed of lower parts (12; 201) and upper parts (11; 203), the lower parts (12; 201) being attached to the aircraft floor (13) and the upper parts (11; 203) being arranged on the lower parts (12; 201), **characterized in that** longitudinal guide elements (10) and transverse guide elements (20) are provided as guide elements (10, 20), the longitudinal guide elements (10) being formed differently to the transverse guide elements and at at least one intersection point (18) of longitudinal and transverse guide elements (10; 20) cable points (19) being provided, which form a cable laying path (4) with the longitudinal and transverse guide elements (10; 20).

2. Arrangement according to claim 1, **characterized in that** the lower part (12) of the longitudinal guide element (10) has a central web (121) as well as side webs (122) running laterally spaced in parallel, which webs respectively form at least one cable duct (123) to the left and right of the central web (121), the upper part (11) of the longitudinal guide element (10) has a snap-on element (111) corresponding to the central web (121), lateral covering elements (112) for covering the cable ducts (123) are provided starting out from the snap-on element (111), the edge area (113) of a lateral covering element (112) projecting beyond the respective cable duct (123) and being pliant in a flexibly sprung manner.

3. Arrangement according to claim 1 or 2, **characterized in that** the longitudinal guide elements (10) run substantially parallel to seat rails (5) provided in the aircraft floor (13), the lateral covering element (112) pointing outwards being able to be arranged with its edge area (113) over a floor covering edge (15) and the covering element (112) pointing inwards being directed with its edge area (113) towards the seat rail (5).

4. Arrangement according to one of claims 1 to 3, **characterized in that** above the seat rail (5) a seat rail cover (9) is arranged, which has a central part (91) with latching elements (92), which engage in the seat rail (5), lateral cover strips (93) being provided starting out from the central part (91), the respective edge area (94) of which strips is formed to be sprung flexibly in the direction of the floor (13).

5. Arrangement according to claim 4, **characterized in that** the edge area (94) of the seat rail cover (9) and the outer shape of the upper part (11) of the longitudinal guide element (10) are formed corresponding to one another.

6. Arrangement according to one of claims 1 to 5, **characterized in that** the seat rail cover (9) following engagement in the seat rail (5) covers the longitudinal guide elements (10) running parallel to the seat rail (5) at least partially, the edge area (94) of the seat rail cover (9) at least partially overlapping the upper part (11) of the longitudinal guide element (10) in a longitudinal direction and being insertable into an offset (114).

7. Arrangement according to one of claims 1 to 6, **characterized in that** the seat rail cover (9) following engagement in the seat rail (5) covers the cable ducts (16) and/or floor covering edges (15) running parallel to the seat rail (5) at least partially, the edge area (94) of the seat rail cover (9) extending over the covering edge (15) and covering or holding this.

8. Arrangement according to one of claims 1 to 7, **characterized in that** at least the flexibly sprung areas of the seat rail cover (9) and the upper parts (11) consist of synthetic material, preferably polyamide.

9. Arrangement according to one of claims 1 to 8, **characterized in that** the longitudinal guide element (10) is provided in the end area of a cable laying arrangement (1) with an end cap (17) that can be snapped into a cable duct (123).

10. Arrangement according to one of claims 1 to 9, **characterized in that** the transverse guide element (20) provides in the central area a cable duct (201), which has laterally arranged transitional bevels (202).

11. Arrangement according to one of claims 1 to 10, **characterized in that** connecting means (204) are provided on the transverse guide element (20).

12. Arrangement according to one of claims 1 to 11, **characterized in that** the cable points (19) are formed from a lower section (191) for receiving the cables and lines and an upper section (192) for covering, connection means (195) being provided on the receptacle (193) of the lower section running transversely, which connection means are actively connected to connection means (204) of the transverse guide element (20).

13. Arrangement according to one of claims 10 to 12, **characterized in that** the transverse guide element (20) and the transversely running receptacle (193) of the lower section (191) can be arranged below the floor covering (14).

14. Arrangement according to one of claims 12 and 13, **characterized in that** the upper section (192) is provided as a cover of the area (194) running longitudinally, latching elements (197, 198) engaging on a stiffening area (196, 199) of the lower section (191) and on holders (199) in the longitudinally running area (194) of the lower section (191).

## Revendications

1. Dispositif pour la pose de câbles au niveau du plancher d'un avion de ligne, avec des éléments guide-câbles qui forment des conduites de câbles, les éléments guide-câbles (10, 20) comprenant chaque fois des parties inférieures (12; 201) et des parties supérieures (11; 203), les parties inférieures (12; 201) étant fixées au plancher (13) de l'avion et les parties supérieures (11; 203) étant disposées sur les parties inférieures (12; 201), **caractérisé par le fait qu'**il est prévu comme éléments guide-câbles (10, 20) des éléments guide-câbles longitudinaux (10) et des éléments guide-câbles transversaux (20), les éléments guide-câbles longitudinaux (10) présentant une conformation différente de celle des éléments guide-câbles transversaux et un élément de changement de direction de câble (19) étant prévu en au moins un point d'intersection (18) entre éléments guide-câbles longitudinaux et transversaux (10; 20), lequel élément de changement de direction forme avec les éléments longitudinaux et transversaux (10; 20) un chemin de câble (4).

2. Dispositif selon la revendication 1, **caractérisé par le fait que** la partie inférieure (12) de l'élément guide-câbles longitudinal (10) présente une cloison médiane (121) et, à distance de celle-ci latéralement, des cloisons latérales (122) parallèles qui forment respectivement à gauche et à droite de la cloison médiane (121) au moins une conduite de câbles (123), que la partie supérieure (11) de l'élément guide-câbles longitudinal (10) présente un élément d'encliquetage (111) qui correspond à la cloison médiane (121), qu'à partir de l'élément d'encliquetage (111) s'étendent des éléments de couverture (112) latéraux pour couvrir les conduites de câbles (123), la zone de bord (113) d'un élément de couverture (112) latéral s'étendant au-delà de la conduite de câbles (123) concernée et pouvant fléchir de manière élastique.

3. Dispositif selon la revendication 1 ou 2, **caractérisé par le fait que** les éléments guide-câbles longitudinaux (10) s'étendent essentiellement parallèlement à des rails de sièges (5) prévus dans le plancher (13) de l'avion, la zone de bord (113) de l'élément de couverture (112) latéral tourné vers l'extérieur pouvant être disposée au-dessus du bord d'un revêtement de plancher (15) et la zone de bord (113) de l'élément de couverture (112) tourné vers l'intérieur étant dirigée vers le rail de sièges (5).

4. Dispositif selon une des revendications 1 à 3, **caractérisé par le fait qu'**au-dessus du rail de sièges (5) est disposé un couvercle de rail de sièges (9) qui présente une partie médiane (91) avec des éléments d'encliquetage (92) destinés à s'encliqueter dans le rail de sièges (5), et partant de la partie médiane (91) des ailes de couverture (93) latérales dont la zone de bord (94) concernée est flexible élastiquement en direction du plancher (13).

5. Dispositif selon la revendication 4, **caractérisé par le fait que** la zone de bord (94) du couvercle de rail de sièges (9) ainsi que la forme extérieure de la partie supérieure (11) de l'élément guide-câbles longitudinal (10) sont mutuellement adaptées.

6. Dispositif selon une des revendications 1 à 5, **caractérisé par le fait que** le couvercle de rail de sièges (9) après encliquetage dans le rail de sièges (5) couvre au moins partiellement les éléments guide-câbles longitudinaux (10) parallèles au rail de sièges (5), la zone de bord (94) du couvercle de rail de sièges (9) chevauchant au moins partiellement la partie supérieure (11) de l'élément guide-câbles longitudinal (10) dans la direction longitudinale et pouvant être insérée dans un décrochement (114).

7. Dispositif selon une des revendications 1 à 6, **caractérisé par le fait que** le couvercle de rail de sièges (9) après encliquetage dans le rail de sièges (5) couvre au moins partiellement les guide-câbles (16) parallèles au rail de sièges (5) et/ou les bords du revêtement de plancher (15), la zone de bord (94) du couvercle de rail de sièges (9) s'étendant au-dessus du bord de revêtement (15) et couvrant, voire tenant celui-ci.

8. Dispositif selon une des revendications 1 à 7, **caractérisé par le fait qu'**au moins les zones flexibles élastiquement du couvercle de rail de sièges (9) et les parties supérieures (11) sont en matière plastique, de préférence en polyamide.

9. Dispositif selon une des revendications 1 à 8, **caractérisé par le fait que** l'élément guide-câbles longitudinal (10) dans la région d'extrémité d'un dispositif de pose de câbles (1) est muni d'un bouchon d'extrémité (17) encliquetable dans une conduit de câbles (201).

10. Dispositif selon une des revendications 1 à 9, **caractérisé par le fait que** l'élément guide-câbles transversal (20) comporte dans la région médiane une conduite de câbles (201) qui présente des surfaces de raccordement (202) latérales inclinées.

11. Dispositif selon une des revendications 1 à 10, **caractérisé par le fait que** des moyens de liaison (204) sont prévus sur l'élément guide-câbles transversal (20).

12. Dispositif selon une des revendications 1 à 11, **caractérisé par le fait que** l'élément de changement de direction de câble (19) est formé d'un partie inférieure (191) destinée à recevoir les câbles et conduites et d'une partie supérieure (192) de couverture, des moyens de liaison (195) qui coopèrent avec des moyens de liaison (204) de l'élément guide-câbles transversal (20) étant prévus sur la base (193) transversale de la partie inférieure.

13. Dispositif selon une des revendications 10 à 12, **caractérisé par le fait que** l'élément guide-câbles transversal (20) et la base (193) transversale de la partie inférieure (191) peuvent être disposés sous le revêtement de plancher (14).

14. Dispositif selon une des revendications 12 et 13, **caractérisé par le fait que** la partie supérieure (192) est conçue comme couvercle de la portion longitudinale (194), des éléments d'encliquetage (197, 198) s'accrochant sur une partie de rigidification (196, 199) de la partie inférieure (191) et sur des parties de fixation (199) de la portion longitudinale (194) de la partie inférieure (191).
